# EUROPÄISCHE PATENTSCHRIFT

(11) **EP 2 831 419 B1**
(45) Veröffentlichungstag und Bekanntmachung des Hinweises auf die Patenterteilung: **10.05.2017**
(21) Anmeldenummer: 13714259.2
(22) Anmeldetag: 28.03.2013
(51) Int. Cl.: F04B 39/04

(54) **DICHTUNGSANORDNUNG**
SEAL ARRANGEMENT
SYSTÈME D'ÉTANCHÉITÉ

(30) Priorität: 29.03.2012 DE 102012102700
(43) Veröffentlichungstag der Anmeldung: 04.02.2015
(73) Patentinhaber: ElringKlinger AG, 72581 Dettingen (DE)
(72) Erfinder: HOCKER, Klaus, 74379 Ingersheim (DE); SCHUHMACHER, Walter, 74321 Bietigheim-Bissingen (DE)
(74) Vertreter: Hoeger, Stellrecht & Partner Patentanwälte mbB
(86) Internationale Anmeldenummer: PCT/EP2013/056679
(87) Internationale Veröffentlichungsnummer: WO 2013/144280

(56) Entgegenhaltungen:
- EP-A2- 1 096 147
- DE-A1- 2 630 123
- DE-A1-102010 030 342
- GB-A- 1 040 245
- GB-A- 1 113 399
- GB-A- 2 185 545
- US-A1- 2007 166 174

## Beschreibung

Die vorliegende Erfindung betrifft eine Vorrichtung mit einer Dichtungsanordnung gemäß dem Oberbegriff des Anspruchs 1.

Entsprechende Vorrichtungen, bei denen eine solche Abdichtung erforderlich ist, sind insbesondere Kolbenpumpen wie z.B. Hochdruckpumpen zur Benzindirekteinspritzung bei Verbrennungsmotoren, aber auch verschiedene Arten von Ventilen wie z.B. Abfüllventile für Getränke oder andere Flüssigkeiten. Prinzipiell muss bei diesen Vorrichtungen das Medium, das gepumpt, abgefüllt bzw. transportiert werden soll, entweder gegen die Umgebung oder gegen ein weiteres Medium, insbesondere ein Schmiermittel, abgedichtet werden, und zwar sowohl in Ruheposition des beweglichen Elements als auch während dessen Hin- und Herbewegung.

Die aus dem Stand der Technik bekannten Dichtungsanordnungen umfassen zu diesem Zweck eine Lippendichtung, die in einem Spaltbereich zwischen dem beweglichen Element und dem feststehenden Element angeordnet ist, wenn das bewegliche Element in dem feststehenden Element aufgenommen ist. Die Lippendichtung ist dabei an dem feststehenden Element oder an dem beweglichen Element festgelegt und umfasst mindestens eine Dichtlippe, die mit einer Vorspannung an dem jeweils anderen Element anliegt und an dessen Oberfläche entlang gleitet, wenn sich das bewegliche Element hin- und herbewegt. In der Regel sind diese Lippendichtungen so ausgestaltet, dass in Abhängigkeit von der Druckdifferenz zwischen dem Medium und der Umgebung bzw. zwischen den beiden Medien die Anpresskraft der Dichtlippe auf die Oberfläche und damit die Dichtwirkung erhöht wird.

Derartige Dichtungsanordnungen haben jedoch den generellen Nachteil, dass sie selbst bei optimaler Ausgestaltung keine 100%ige Abdichtung gewährleisten können. In Abhängigkeit von der Art der Vorrichtung, den Betriebsbedingungen und dem Verschleiß der Lippendichtung mit zunehmender Betriebsdauer treten in einem gewissen Umfang immer Leckagen auf, d.h. ein Aus- oder Übertritt eines Mediums in die Umgebung oder in das jeweils andere Medium. Insbesondere für das Medium mit dem höheren Druck gilt dabei, dass bei jeder Bewegung des beweglichen Elements ein dünner Medienfilm unter der Dichtlippe hindurchgeschleppt wird, der bei der entgegengesetzten Bewegung dann zum Teil abgestreift wird und in die Umgebung bzw. das andere Medium gelangt.

Bei Hochdruckpumpen für die Direkteinspritzung von Benzin oder Dieselkraftstoff sind derartige Leckagen besonders kritisch, da sowohl ein Übertritt von Kraftstoff in das Motoröl als auch ein Übertritt von Motoröl in den Kraftstoff äußerst nachteilig sind und für einen einwandfreien Betrieb des Verbrennungsmotors soweit wie möglich reduziert werden müssen. Im ersteren Fall verschlechtert sich durch die Verdünnung des Motoröls dessen Schmierwirkung, und im letzteren Fall wird das übergetretene Motoröl unvollständig verbrannt, was zu Rußablagerungen insbesondere an den Ventilen führen kann.

Ein weiterer Nachteil von Lippendichtungen ist der auftretende Verschleiß, insbesondere unter extremen Einsatzbedingungen wie einer hohen Druckdifferenz zwischen den Medien und einer hohen Frequenz des beweglichen Elements. Gerade bei den oben genannten Hochdruckpumpen entsteht durch die hohen Anpresskräfte eine erhebliche Reibungswärme, sodass auch Dichtlippen aus relativ verschleißfesten Materialien wie PTFE mit zunehmender Betriebsdauer einem deutlichen Verschleiß unterliegen. Dies führt wiederum zu einer zunehmenden Leckage der Dichtungsanordnung und im Extremfall sogar zum Totalversagen.

Die GB 1 040 245 A offenbart eine Dichtungsanordnung mit einem Faltenbalg aus einem PTFE-Material.

Die DE 26 30 123 A1 offenbart eine Einrichtung zum Schutz der Kolbenstangen von Kolbenpumpen gegen Verschmutzung mit einem die Kolbenstange umgebenden Faltenbalg aus Metall oder Kunststoff, dessen Enden einerseits mit dem freien Ende der Kolbenstange und andererseits mit dem Pumpengehäuse gasdicht verbunden sind.

Die DE 10 2010 030 342 A1 offenbart eine Kolbenpumpe mit einem Pumpenkolben, der in einer in einem Pumpengehäuse angeordneten Pumpenbohrung axial verschiebbar ist, einer Kolbenringeinheit und einer Ventileinheit. Der Pumpenkolben ist als Faltenbalg ausgeführt.

Die GB 1 113 399 offenbart eine Öldichtung für eine sich hin- und herbewegende Stange, umfassend einen einstückigen Faltenbalg zur Befestigung an einem Ende der Stange.

Der vorliegenden Erfindung liegt daher die Aufgabe zugrunde, eine Vorrichtung mit einer Dichtungsanordnung vorzuschlagen, bei der diese Nachteile vollständig oder weitgehend vermieden werden.

Diese Aufgabe wird bei der Dichtungsanordnung der eingangs genannten Art erfindungsgemäß dadurch gelöst, dass das PTFE-Material ein homopolymeres PTFE umfasst oder ein modifiziertes PTFE mit einem Comonomergehalt von 0,1 Gew.% oder weniger.

Durch das Vorsehen eines Faltenbalgs bei der erfindungsgemäßen Dichtungsanordnung wird eine hermetische Abdichtung des ersten Mediums gegen die Umgebung oder gegen das zweite Medium ermöglicht. Systembedingte Leckagen können somit ausgeschlossen und eine im Wesentlichen vollständige Dichtigkeit der Anordnung gewährleistet werden, zumal die dichtende Festlegung der Endbereiche des Faltenbalgs an dem feststehenden bzw. beweglichen Element durch einen entsprechenden Kraftschluss problemlos und zuverlässig durchgeführt werden kann. Im Gegensatz zu einer Lippendichtung kommt es bei der Erfindung zu keinerlei Gleitbewegung des dichtenden Elements, d.h. des Faltenbalgs, entlang der Oberfläche des beweglichen oder des feststehenden Elements.

Die Hin- und Herbewegung der beiden Elemente relativ zueinander wird durch die besondere Struktur des Faltenbalgs ausgeglichen, wie sie aus dem Stand der Technik an sich bekannt ist. Unter einem Faltenbalg wird im Rahmen der vorliegenden Erfindung jedes im Wesentlichen hohlzylindrische Element verstanden, welches aufgrund einer gefalteten, gewellten oder ähnlichen Wandstruktur zu einer flexiblen Längenänderung entlang seiner Längsachse in der Lage ist. Der Faltenbalg kann prinzipiell beliebige Querschnittsformen aufweisen, wobei eine runde Querschnittsform bevorzugt ist, d.h. eine rotationssymmetrische Ausbildung des Faltenbalgs in Bezug auf seine Längsachse.

Bei einer bevorzugten Ausführungsform der Erfindung ist die Vorrichtung eine Pumpe oder ein Ventil, und das bewegliche Element ist ein Kolben oder eine Stange. Die Aufnahme in dem feststehenden Element ist in der Regel hohlzylindrisch ausgebildet, sodass zwischen dem Kolben oder der Stange und der Innenwand der Aufnahme ein Ringspalt ausgebildet ist.

Die erfindungsgemäße Dichtungsanordnung eignet sich insbesondere für Kolbenpumpen, bei denen eine hohe Druckdifferenz zwischen den beiden Medien herrscht und bei denen der Kolben eine hochfrequente, kurzhubige Hin- und Herbewegung durchführt, wie z.B. bei einer Hochdruckpumpe für die Direkteinspritzung von Benzin oder Diesel.

Ventile, bei denen die erfindungsgemäße Dichtungsanordnung besonders vorteilhaft eingesetzt werden kann, sind insbesondere Füllventile für Abfüllanlagen, Aseptikventile oder Magnetventile.

Der Faltenbalg umfasst erfindungsgemäß eine oder mehrere Lagen aus einem PTFE-Material. PTFE weist eine hohe Temperatur- und Chemikalienbeständigkeit auf und eignet sich aus diesem Grund für Dichtungsanordnungen für verschiedenste Anwendungen, insbesondere auch für den Kontakt mit aggressiven oder reaktiven Medien. Zudem kann durch die Auswahl geeigneter PTFE-Typen eine hohe Wechselbiegefestigkeit erreicht werden, was für die Verschleißfestigkeit und Lebensdauer des Faltenbalgs von besonderer Bedeutung ist.

Das PTFE-Material, aus dem die Lage(n) des Faltenbalgs gebildet ist/sind, umfasst ein homopolymeres PTFE oder ein modifiziertes PTFE mit einem Comonomergehalt von 0,1 Gew.% oder weniger. Das PTFE ist also entweder ausschließlich aus Tetrafluorethylen-Einheiten gebildet, oder es umfasst einen geringen Anteil eines ebenfalls fluorierten Comonomers. Modifiziertes PTFE weist im Wesentlichen dieselben Eigenschaften auf wie homopolymeres PTFE, insbesondere ist es (im Gegensatz zu PTFE-Copolymeren mit
einem höheren Comonomergehalt) ebenfalls nicht schmelzverarbeitbar und weist eine hohe Wechselbiegefestigkeit auf. Das Comonomer ist vorzugsweise ein Perfluoralkylvinylether, insbesondere Perfluorpropylvinylether (PPVE).

Besonders günstig ist es, wenn das PTFE ein Emulsions-PTFE (E-PTFE) ist, welches gemäß dem Emulsionsverfahren hergestellt wurde. Dies gilt sowohl für homopolymeres als auch für modifiziertes PTFE. Emulsions-PTFE kann mittels Pastenextrusion in Form von Schläuchen oder Röhren extrudiert werden, und aus diesen Schläuchen oder Röhren kann dann mittels Formblasen ein Faltenbalg hergestellt werden. Diese Art der Herstellung ist besonders vorteilhaft, da hiermit Faltenbälge mit vielfältigen Abmessungen und Geometrien hergestellt werden können.

Das PTFE-Material kann im Rahmen der Erfindung vollständig aus PTFE gebildet sein, d.h. keine weiteren Zusätze enthalten. Alternativ kann jedoch auch vorgesehen sein, dass das PTFE-Material einen Füllstoff, insbesondere ein Schwarzpigment wie z.B. Ruß, umfasst. Der Anteil an Füllstoff sollte jedoch im Hinblick auf eine mögliche Verringerung der Wechselbiegefestigkeit nicht zu hoch gewählt werden, insbesondere nicht höher als 5 Gew.%. Füllstoffe zur Erhöhung der Abriebfestigkeit des PTFE sind im Rahmen der Erfindung nicht erforderlich, da keine Reibung zwischen dem Faltenbalg und einem anderen Element vorgesehen ist.

Der Faltenbalg ist vorzugsweise mittels Formblasen hergestellt. Diese Herstellungsmethode ist nicht nur im Hinblick auf die bereits angesprochenen Variationsmöglichkeiten bei der Formgebung des Faltenbalgs besonders vorteilhaft, sondern auch im Hinblick auf dessen Eigenschaften, insbesondere die Wechselbiegefestigkeit. Das Formblasen wird bevorzugt ausgehend von einem aus E-PTFE pastenextrudierten Rohling durchgeführt. Zur Herstellung eines mehrlagigen Faltenbalgs können zwei oder mehr Schläuche oder Röhren aus dem PTFE-Material ineinander geschoben und dann gemeinsam mittels Formblasen zu einem Faltenbalg umgeformt werden.

Faltenbälge, die mittels eines spanabhebenden Verfahrens hergestellt sind, insbesondere aus Suspensions-PTFE (S-PTFE), und die für andere Einsatzbereiche aus dem Stand der Technik bekannt sind, eignen sich für die erfindungsgemäße Dichtungsanordnung nicht oder nur eingeschränkt, da sie in der Regel nicht über eine ausreichend hohe Wechselbiegefestigkeit verfügen. Eine Herstellung des Faltenbalges aus S-PTFE mittels Formblasen ist ebenfalls problematisch und im Rahmen der Erfindung weniger bevorzugt.

Die erfindungsgemäße Dichtungsanordnung ist prinzipiell mit einem Faltenbalg mit nur einer Lage aus einem PTFE-Material voll funktionsfähig und ermöglicht eine hermetische Abdichtung, so lange der Faltenbalg unbeschädigt ist. Ein zwei- oder mehrlagiger Faltenbalg erhöht jedoch die Betriebssicherheit der Dichtungsanordnung ist insofern bevorzugt. Bei einem Riss oder Bruch einer der Lagen steht in diesem Fall eine weitere Lage zur Verfügung, um eine Leckage zu verhindern.

Bei einer vorteilhaften Ausführungsform der Erfindung umfasst der Faltenbalg zwei Lagen, die in den Endbereichen miteinander verschweißt sind. Diese Verschweißung kann während der Herstellung des Faltenbalgs mittels Formblasen erfolgen, indem die Endbereiche der beiden ineinander geschobenen Schläuche oder Röhren durch ein Haltewerkzeug zusammengepresst und dann zur Durchführung des Formblasens erhitzt werden.

Ein zwei- oder mehrlagiger Faltenbalg ist in der Vorrichtung (also z.B. in einer Pumpe oder einem Ventil) so angeordnet, dass das erste Medium, welches einen höheren Druck als die Umgebung oder das zweite Medium aufweist, sich im Inneren des Faltenbalgs bzw. in dem Zwischenraum zwischen dem beweglichen Element und dem Faltenbalg befindet. In diesem Fall können die beiden Lagen des Faltenbalgs gleich dick ausgebildet sein oder die innere Lage kann eine größere Dicke aufweisen, da sie unmittelbar dem ersten Medium ausgesetzt ist.

Bei einem zweilagigen Faltenbalg kann zwischen den beiden Lagen ein Drucksensor angeordnet sein. Durch einen solchen Sensor kann eine Beschädigung der inneren Lage sofort detektiert und eine entsprechende Warnung ausgegeben werden, da bei einem Durchtritt des ersten Mediums durch einen Riss oder Bruch in der inneren Lage der Druck zwischen den beiden Lagen stark ansteigt. Dies ist insbesondere bei einer Hochdruckpumpe für die Direkteinspritzung von Kraftstoff von Bedeutung, da hier eine Leckage ohne einen derartigen Sensor nicht unmittelbar registriert wird, jedoch bei einem weiteren Betrieb gravierende Folgen haben kann.

Um eine kraftschlüssige und dichtende Festlegung der Endbereiche des Faltenbalgs an dem feststehenden und dem beweglichen Element zu erzielen, sind die Endbereiche vorzugsweise geklemmt, verspannt oder verschraubt. Dabei können die Endbereiche mit einer radialen und/oder axialen Kraft beaufschlagt werden, bezogen auf die Längsachse des beweglichen Elements und des Faltenbalgs.

Bei einer weiteren vorteilhaften Ausführungsform der Erfindung umfasst die Dichtungsanordnung metallische Verstärkungsringe, die den Faltenbalg von außen umgeben und jeweils in einer Falte des Faltenbalgs angeordnet sind. Durch solche Verstärkungsringe kann dem Druck, der durch das erste Medium von innen auf den Faltenbalg ausgeübt wird, entgegengewirkt werden. Bei der Herstellung des Faltenbalgs mittels Formblasen werden die metallischen Verstärkungsringe zuvor an dem Rohling angeordnet, bevor dieser zu einem Faltenbalg umgeformt wird.

Alternativ oder zusätzlich zu den Verstärkungsringen kann eine ähnliche Verstärkungsfunktion auch dadurch erreicht werden, dass die Dichtungsanordnung einen Stützschlauch umfasst, der den Faltenbalg von außen umgibt. Ein solcher Stützschlauch ist bevorzugt aus einem besonders reißfesten Material gebildet, beispielsweise aus einem Glasfasergeflecht.

Die vorstehend beschriebenen Optionen zur Verstärkung des Faltenbalgs gegen eine Druckbeaufschlagung von innen sind insbesondere bei solchen Ausführungsformen der Erfindung von Bedeutung, bei denen sich das erste Medium sowohl in der Aufnahme in dem feststehenden Element als auch in dem Zwischenraum zwischen dem beweglichen Element und dem Faltenbalg befindet. Der Faltenbalg stellt in diesem Fall das einzige dichtende Element der erfindungsgemäßen Dichtungsanordnung dar.

Bei relativ hohen Druckdifferenzen zwischen dem ersten Medium und der Umgebung oder dem zweiten Medium kann es jedoch vorteilhaft sein, wenn der Faltenbalg von dem Druck des ersten Mediums zumindest teilweise entlastet wird. Gemäß einer weiteren bevorzugten Ausführungsform der Erfindung ist daher vorgesehen, dass die Dichtungsanordnung ferner eine Lippendichtung zur Abdichtung des ersten Mediums gegen den Zwischenraum zwischen dem beweglichen Element und dem Faltenbalg umfasst. Eine solche Lippendichtung verhindert, dass das erste Medium, welches sich in der Aufnahme in dem feststehenden Element befindet, mit seinem vollen Druck das Innere des Faltenbalgs ausfüllt und diesen von innen mit einem hohen Druck beaufschlagt. Aufgrund der eingangs beschriebenen Nachteile von Lippendichtungen dringen durch Leckagen zwar gewisse Mengen des ersten Mediums in den Faltenbalg ein, was jedoch unkritisch ist, da eine hermetische Abdichtung gegen die Umgebung oder das zweite Medium durch den Faltenbalg in jedem Fall sichergestellt ist.

Die Lippendichtung ist bevorzugt an dem feststehenden Element oder an dem beweglichen Element festgelegt und umfasst mindestens eine Dichtlippe, die an dem jeweils anderen Element mit einer Vorspannung anliegt. Die mindestens eine Dichtlippe ist bevorzugt aus PTFE, aus einem schmelzverarbeitbaren Fluorpolymer oder aus einem Compound dieser Polymere mit einem oder mehreren Füllstoffen gebildet. Die Vorspannung kann durch das Material der Dichtlippe selbst erreicht werden, insbesondere aufgrund des Memory-Effektes von PTFE, und/oder durch ein Federelement aus Stahl.

Wenn die erfindungsgemäße Dichtungsanordnung eine derartige Lippendichtung umfasst, ist es ferner bevorzugt, wenn die Dichtungsanordnung eine Fluidleitung zur Entfernung des ersten Mediums aus dem Zwischenraum zwischen dem beweglichen Element und dem Faltenbalg umfasst. Durch die Fluidleitung kann das erste Medium insbesondere in ein entsprechendes Reservoir zurückgeführt werden, im Fall einer Einspritzpumpe z.B. in einen Kraftstofftank. Hierdurch wird vermieden, dass sich der Zwischenraum zwischen dem beweglichen Element und dem Faltenbalg nach einer bestimmten Betriebsdauer vollständig mit dem ersten Medium füllt und ein entsprechender Druck aufgebaut wird.

Die vorliegende Erfindung betrifft ferner eine Hochdruckpumpe für die Direkteinspritzung von Kraftstoff bei einem Verbrennungsmotor, umfassend eine erfindungsgemäße Dichtungsanordnung, wobei das erste Medium ein Kraftstoff (insbesondere Benzin oder Dieselkraftstoff) und das zweite Medium ein Schmiermittel (insbesondere Motoröl) ist, und wobei das bewegliche Element ein durch eine Nockenwelle angetriebener Kolben ist. Derartige Hochdruckpumpen werden typischerweise mit einer Kolbenfrequenz von bis zu 250 Hz und einem Kolbenhub von 2 bis 10 mm betrieben, wobei der Druck des Kraftstoffs typischerweise etwa 6 bar beträgt (mit Druckspitzen von bis zu 40 bar) und der Druck des Schmiermittels bei maximal 1 bar liegt. Die Temperatur des Kraftstoffs beträgt bis zu 110 °C und die Temperatur des Schmiermittels bis zu 130 °C.

Die besonderen Vorteile der erfindungsgemäßen Hochdruckpumpe, d.h. insbesondere die hermetische Abdichtung des Kraftstoffs von dem Schmiermittel und die höhere Verschleißfestigkeit des Faltenbalgs im Vergleich zu einer Lippendichtung, wurden bereits im Zusammenhang mit der erfindungsgemäßen Dichtungsanordnung im Einzelnen beschrieben. Ein Faltenbalg für eine erfindungsgemäße Hochdruckpumpe weist vorzugsweise eine Länge von 10 bis 30 mm, einen minimalen Innendurchmesser von 5 bis 12 mm und eine Wandstärke von 0,1 bis 1,0 mm auf.

Des Weiteren betrifft die Erfindung auch ein Abfüllventil für eine Abfüllanlage für Getränke, umfassend eine erfindungsgemäße Dichtungsanordnung, wobei das erste Medium ein abzufüllendes Getränk ist. In derartigen Anlagen werden Getränke zum Teil unter hohem Druck und bei hohen Temperaturen abgefüllt, sodass auch hier hohe Anforderungen an die Dichtungsanordnung gestellt werden. Typische Betriebsbedingungen sind z.B. ein Ventilhub von 12 mm, eine Frequenz von 20 Hz, ein Druck von bis zu 8 bar und eine Temperatur von bis zu 120 °C. Die Dichtungsanordnung muss hierbei auch gegenüber den eingesetzten Reinigungs- und Sterilisationsmitteln ausreichend beständig sein.

Diese und weitere Vorteile der Erfindung werden anhand der nachfolgenden Ausführungsbeispiele unter Bezugnahme auf die Figuren näher erläutert.

Es zeigen im Einzelnen:
- Figur 1:: eine Querschnittsdarstellung eines ersten Ausführungsbeispiels einer erfindungsgemäßen Dichtungsanordnung; und
- Figur 2:: eine Querschnittsdarstellung eines zweiten Ausführungsbeispiels einer erfindungsgemäßen Dichtungsanordnung.

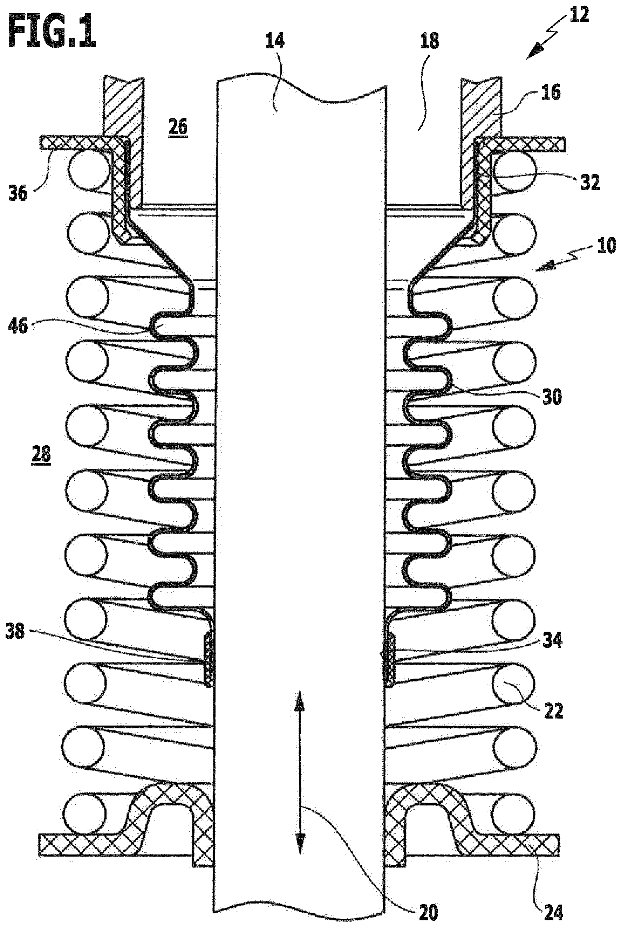

Die Figur 1 zeigt einen Querschnitt durch ein erstes Ausführungsbeispiel einer erfindungsgemäßen Dichtungsanordnung 10 als Bestandteil einer lediglich ausschnittsweise dargestellten Vorrichtung 12. Bei der Vorrichtung 12 handelt es sich in diesem Fall um eine Kolbenpumpe mit einem beweglichen Element 14 in Form eines Kolbens und einem feststehenden Element 16, welches eine Aufnahme 18 für den Kolben 14 bildet.

Beim Betrieb der Kolbenpumpe 12 führt der Kolben 14 eine lineare Hin- und Herbewegung entlang seiner Längsachse 20 aus. Dabei wird der Kolben 14 jeweils durch ein in der Figur nicht gezeigtes Antriebselement (z.B. eine Nockenwelle) in Richtung der Aufnahme 18 bewegt, während die entgegengesetzte Bewegung durch eine Feder 22 bewirkt wird. Die Feder 22 stützt sich einerseits an dem feststehenden Element 16 und andererseits an einem gegenüberliegenden Teller 24 ab.

Bei der Kolbenpumpe 12 befindet sich das zu pumpende erste Medium 26 unter anderem in der Aufnahme 18 des feststehenden Elements 16, und ein zweites Medium 28, bei dem es sich insbesondere um ein Schmiermittel handelt, befindet sich in dem Bereich unterhalb des feststehenden Elements 16. Das erste Medium 26 weist einen höheren Druck auf das zweite Medium 28.

Um das erste Medium 26 gegen das zweite Medium 28 abzudichten, umfasst die erfindungsgemäße Dichtungsanordnung 10 einen Faltenbalg 30 aus einem PTFE-Material, der den Kolben 14 teilweise aufnimmt. Der Faltenbalg 30 ist in der Figur 1 einlagig dargestellt, er kann jedoch alternativ auch mehrlagig ausgebildet sein, insbesondere zweilagig.

Das PTFE-Material, aus dem der Faltenbalg 30 gebildet ist, umfasst bevorzugt ein homopolymeres PTFE oder ein modifiziertes PTFE mit einem Comonomergehalt von 0,1 Gew.% oder weniger, wobei es sich insbesondere um ein Emulsions-PTFE handelt.

Der Faltenbalg 30 ist mit seinem ersten Endbereich 32 an dem feststehenden Element 16 und mit seinem zweiten Endbereich 34 an dem Kolben 14 kraftschlüssig und dichtend festgelegt. Die Festlegung an dem feststehenden Element 16 erfolgt dabei mittels eines Klemmelements 36 und die Festlegung an dem Kolben 14 mittels eines Spannrings 38, jeweils durch radiale Kraftbeaufschlagung der Endbereiche 32 und 34 des Faltenbalgs 30 in Bezug auf die Längsachse 20.

Bei der Hin- und Herbewegung des Kolbens 14 kann der Faltenbalg 30 aufgrund seiner gefalteten bzw. gewellten Wandstruktur seine Länge flexibel ändern. Auf diese Weise wird eine hermetische und leckagefreie Abdichtung zwischen dem ersten Medium 26 und dem zweiten Medium 28 durch die erfindungsgemäße Dichtungsanordnung 10 ermöglicht.

Bei der Kolbenpumpe 12 kann es sich insbesondere um eine Hochdruckpumpe zur Direkteinspritzung von Kraftstoff bei einem Verbrennungsmotor handeln. Dichtungsanordnungen mit einem gleichen oder ähnlichen Aufbau können jedoch auch bei anderen Pumpen oder bei Ventilen eingesetzt werden.

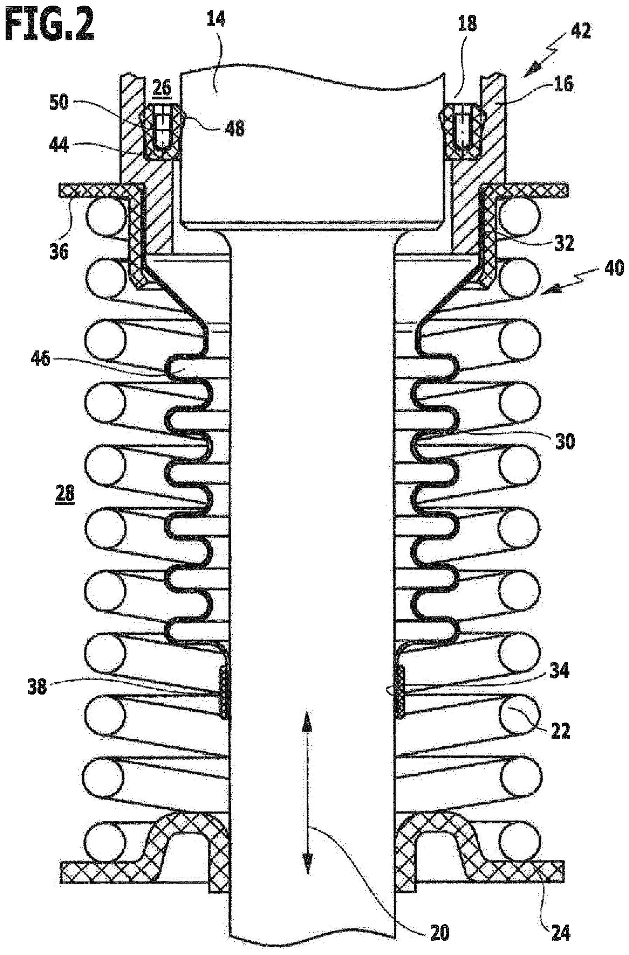

Die Figur 2 zeigt einen Querschnitt durch ein zweites Ausführungsbeispiel einer erfindungsgemäßen Dichtungsanordnung 40 als Bestandteil einer Vorrichtung 42. Dieses Ausführungsbeispiel entspricht bis auf die nachfolgend beschriebenen Unterschiede dem ersten Ausführungsbeispiel gemäß der Figur 1, wobei gleiche oder einander entsprechende Elemente jeweils mit demselben Bezugszeichen versehen sind.

Die Dichtungsanordnung 40 umfasst zusätzlich eine Lippendichtung 44, die in dem Ringspalt zwischen der Innenwand der Aufnahme 18 und dem Kolben 14 angeordnet ist. Diese Lippendichtung 44 dient zur Abdichtung des in der Aufnahme 18 befindlichen ersten Mediums 26 gegen den Zwischenraum 46 zwischen dem Kolben 14 und dem Faltenbalg 30. Hierdurch wird verhindert, dass der Faltenbalg 30 von innen mit dem hohen Druck des ersten Mediums 26 beaufschlagt wird.

Die Lippendichtung 44 ist an dem feststehenden Element 16 festgelegt und umfasst eine Dichtlippe 48, die an dem Kolben 14 mit einer Vorspannung anliegt. Diese Vorspannung wird durch eine Stahlfeder 50 mit einem U-förmigen Profil erzeugt, die in die Lippendichtung 44 eingelegt ist. Mit steigendem Druck des ersten Mediums 26, der auf die Dichtlippe 48 einwirkt, wird die Anpresskraft an den Kolben 14 und damit die Dichtungswirkung weiter verstärkt.

Alternativ zu der in der Figur 2 dargestellten Ausführungsform der Lippendichtung 44 sind eine Vielzahl weiterer Ausgestaltungen möglich, z.B. eine Lippendichtung mit zwei in Bezug auf die Längsachse 20 in entgegengesetzte Richtungen weisenden Dichtlippen. Bei einer oder mehreren Dichtlippen kann auch auf ein Federelement verzichtet werden, wobei die Vorspannung dann durch einen Memory-Effekt des Materials der Dichtlippe erzeugt wird. Hierbei handelt es sich insbesondere um ein Material aus PTFE oder einem schmelzverarbeitbaren Fluorpolymer, oder um einen entsprechenden Compound.

Aufgrund von Leckagen der Lippendichtung 44, insbesondere in Folge von Verschleiß bei zunehmender Betriebsdauer der Vorrichtung 42, können geringe Mengen des ersten Mediums 26 dennoch in den Zwischenraum 46 gelangen. Um einen Druckaufbau in dem Zwischenraum 46 zu vermeiden, kann eine Fluidleitung vorgesehen sein (in der Figur nicht dargestellt), um das erste Medium 26 aus dem Zwischenraum 46 zu entfernen und einem entsprechenden Reservoir (z.B. einem Kraftstofftank im Fall einer Einspritzpumpe) zuzuführen.

## Patentansprüche

1. Vorrichtung (12; 42) mit einem beweglichen Element (14) und einem feststehenden Element (16), wobei das bewegliche Element (14) für eine lineare Hin- und Herbewegung entlang einer Längsachse (20) ausgelegt ist und das feststehende Element (16) eine Aufnahme (18) für das bewegliche Element (14) bildet, mit einer Dichtungsanordnung (10; 40) zur Abdichtung eines ersten Mediums (26) gegen die Umgebung oder gegen ein zweites Medium (28), wobei die Dichtungsanordnung (10; 40) einen Faltenbalg (30) mit einer oder mehreren Lagen aus einem PTFE-Material umfasst, wobei der Faltenbalg (30) das bewegliche Element (14) zumindest teilweise aufnimmt, und wobei ein erster Endbereich (32) des Faltenbalgs (30) an dem feststehenden Element (16) und ein zweiter Endbereich (32) des Faltenbalgs (30) an dem beweglichen Element (14) kraftschlüssig und dichtend festgelegt ist,
**dadurch gekennzeichnet, dass** das PTFE-Material ein homopolymeres PTFE umfasst oder ein modifiziertes PTFE mit einem Comonomergehalt von 0,1 Gew.% oder weniger.

2. Vorrichtung (12; 42) nach Anspruch 1, wobei die Vorrichtung (12; 42) eine Pumpe oder ein Ventil ist, und wobei das bewegliche Element (14) ein Kolben oder eine Stange ist.

3. Vorrichtung (12; 42) nach Anspruch 1 oder 2, wobei das PTFE ein Emulsions-PTFE ist.

4. Vorrichtung (12; 42) nach einem der vorangehenden Ansprüche, wobei das PTFE-Material einen Füllstoff, insbesondere ein Schwarzpigment, umfasst.

5. Vorrichtung (12; 42) nach einem der vorangehenden Ansprüche, wobei der Faltenbalgs (30) mittels Formblasen hergestellt ist.

6. Vorrichtung (12; 42) nach einem der vorangehenden Ansprüche, wobei der Faltenbalg (30) zwei Lagen umfasst, die in den Endbereichen (32, 34) miteinander verschweißt sind.

7. Vorrichtung (12; 42) nach Anspruch 6, wobei zwischen den beiden Lagen ein Drucksensor angeordnet ist.

8. Vorrichtung (12; 42) nach einem der vorangehenden Ansprüche, wobei die Endbereiche (32, 34) des Faltenbalgs (30) geklemmt, verspannt oder verschraubt sind, um eine kraftschlüssige und dichtende Festlegung an dem feststehenden und dem beweglichen Element (16, 14) zu erreichen.

9. Vorrichtung (12; 42) nach einem der vorangehenden Ansprüche, wobei die Dichtungsanordnung (10; 40) metallische Verstärkungsringe umfasst, die den Faltenbalg (30) von außen umgeben und jeweils in einer Falte des Faltenbalgs (30) angeordnet sind, und/oder wobei die Dichtungsanordnung (10; 40) einen Stützschlauch umfasst, der den Faltenbalg (30) von außen umgibt.

10. Vorrichtung (12) nach einem der vorangehenden Ansprüche, wobei sich das erste Medium (26) sowohl in der Aufnahme (18) in dem feststehenden Element (16) als auch in dem Zwischenraum (46) zwischen dem beweglichen Element (14) und dem Faltenbalg (30) befindet.

11. Vorrichtung (42) nach einem der Ansprüche 1 bis 9, wobei die Dichtungsanordnung (10; 40) ferner eine Lippendichtung (44) zur Abdichtung des ersten Mediums (26) gegen den Zwischenraum (46) zwischen dem beweglichen Element (14) und dem Faltenbalg (30) umfasst.

12. Vorrichtung (42) nach Anspruch 11, wobei die Lippendichtung (44) an dem feststehenden Element (16) oder an dem beweglichen Element (14) festgelegt ist und mindestens eine Dichtlippe (48) umfasst, die an dem jeweils anderen Element (14, 16) mit einer Vorspannung anliegt.

13. Vorrichtung (42) nach Anspruch 12, wobei die Dichtungsanordnung (40) eine Fluidleitung zur Entfernung des ersten Mediums (26) aus dem Zwischenraum (46) zwischen dem beweglichen Element (14) und dem Faltenbalg (30) umfasst.

14. Vorrichtung (12; 42) nach einem der vorangehenden Ansprüche, wobei die Vorrichtung (12; 42) eine Hochdruckpumpe für die Direkteinspritzung von Kraftstoff bei einem Verbrennungsmotor ist, wobei das erste Medium (26) ein Kraftstoff und das zweite Medium (28) ein Schmiermittel ist, und wobei das bewegliche Element (14) ein durch eine Nockenwelle angetriebener Kolben ist.

15. Vorrichtung (12; 42) nach einem der Ansprüche 1 bis 13, wobei die Vorrichtung (12; 42) ein Abfüllventil für eine Abfüllanlage für Getränke ist, und wobei das erste Medium (26) ein abzufüllendes Getränk ist.

## Claims

1. A device (12; 42) having a movable element (14) and a fixed element (16), wherein the movable element (14) is configured for linear to-and-fro movement along a longitudinal axis (20) and the fixed element (16) forms a receptacle (18) for the movable element (14), with a seal arrangement (10; 40) for sealing a first medium (26) from the environment or from a second medium (28), wherein the seal arrangement (10; 40) includes a bellows (30) having one or more layers made from a PTFE material, wherein the bellows (30) at least partly receives the movable element (14), and wherein a first end region (32) of the bellows (30) is fastened in force-locking and sealing manner to the fixed element (16) and a second end region (32) of the bellows (30) is fastened in force-locking and sealing manner to the movable element (14),
**characterized in that** the PTFE material comprises a homopolymer PTFE or a modified PTFE with a comonomer content of 0.1 weight % or less.

2. The device (12; 42) according to Claim 1, in which the device (12; 42) is a pump or valve, and the movable element (14) is a piston or rod.

3. The device (12; 42) according to Claim 1 or 2, in which the PTFE is a PTFE emulsion.

4. The device (12; 42) according to one of the preceding claims, in which the PTFE material includes a filler, in particular a black pigment.

5. The device (12; 42) according to one of the preceding claims, in which the bellows (30) is produced by means of blow moulding.

6. The device (12; 42) according to one of the preceding claims, in which the bellows (30) includes two layers which are welded to one another in the end regions (32, 34).

7. The device (12; 42) according to Claim 6, in which a pressure sensor is arranged between the two layers.

8. The device (12; 42) according to one of the preceding claims, in which, in order to achieve force-locking and sealing fastening to the fixed and the movable element (16, 14), the end regions (32, 34) of the bellows (30) are clamped, braced or screwed.

9. The device (12; 42) according to one of the preceding claims, in which the seal arrangement (10; 40) includes metal reinforcement rings which surround the bellows (30) on the outside and are each arranged in a fold of the bellows (30), and/or in which the seal arrangement (10; 40) includes a supporting hose that surrounds the bellows (30) on the outside.

10. The device (12) according to one of the preceding claims, in which the first medium (26) is located both in the receptacle (18) in the fixed element (16) and in the intermediate space (46) between the movable element (14) and the bellows (30).

11. The device (42) according to one of Claims 1 to 9, in which the seal arrangement (10; 40) further includes a lip seal (44) for sealing the first medium (26) from the intermediate space (46) between the movable element (14) and the bellows (30).

12. The device (42) according to Claim 11, in which the lip seal (44) is fastened to the fixed element (16) or the movable element (14) and includes at least one sealing lip (48) which abuts with a pretension against the respectively other element (14, 16).

13. The device (42) according to Claim 12, in which the seal arrangement (40) includes a fluid line for removing the first medium (26) from the intermediate space (46) between the movable element (14) and the bellows (30).

14. The device (12; 42) according to one of the preceding claims, wherein the device (12; 42) is a high-pressure pump for direct injection of fuel in an internal combustion engine, in which the first medium (26) is a fuel and the second medium (28) is a lubricant, and in which the movable element (14) is a piston driven by a camshaft.

15. The device (12; 42) according to one of the Claims 1 to 13, wherein the device (12; 42) is a dispenser valve (12; 42) for a filling line for drinks, in which the first medium (26) is a drink to be dispensed.

## Revendications

1. Dispositif (12 ; 42) comprenant un élément mobile (14) et un élément fixe (16) dans lequel l'élément mobile (14) est configuré pour effectuer un mouvement linéaire de va-et-vient le long d'un axe longitudinal (20), et l'élément fixe (16) forme un logement (18) pour l'élément mobile (14), comprenant un système d'étanchéité (10 ; 40) afin d'assurer l'étanchéité d'un premier fluide (26) par rapport à l'environnement ou par rapport à un deuxième fluide (28), le système d'étanchéité (10 ; 40) comprenant un soufflet (30) doté d'une ou plusieurs couches constituées d'un matériau PTFE, le soufflet (30) logeant au moins en partie l'élément mobile (14) et une première partie d'extrémité (32) du soufflet (30) étant fixée à force et hermétiquement sur l'élément fixe (16), et une deuxième partie d'extrémité (32) du soufflet étant fixée à force et hermétiquement sur l'élément mobile (14), **caractérisé en ce que** le PTFE est un PTFE homopolymère ou un PTFE modifié contenant au maximum 0,1 % en poids de comonomère.

2. Dispositif (12 ; 42) selon la revendication 1 **caractérisé en ce que** c'est une pompe ou une soupape et **en ce que** l'élément mobile (14) est un piston ou une barre.

3. Dispositif (12 ; 42) selon la revendication 1 ou la revendication 2 dans lequel le PTFE est une émulsion de PTFE.

4. Dispositif (12 ; 42) selon l'une quelconque des revendications précédentes dans lequel le PTFE comporte une charge, en particulier un pigment noir.

5. Dispositif (12 ; 42) selon l'une quelconque des revendications précédentes dans lequel le soufflet (30) est formé par soufflage.

6. Dispositif (12 ; 42) selon l'une quelconque des revendications précédentes dans lequel le soufflet (30) comporte deux couches soudées ensemble dans les parties d'extrémité (32, 34).

7. Dispositif (12 ; 42) selon la revendication 6 dans lequel un capteur de pression est disposé entre les deux couches.

8. Dispositif (12 ; 42) selon l'une quelconque des revendications précédentes dans lequel les parties d'extrémité (32, 34) du soufflet (30) sont bloquées, contraintes ou vissées afin d'obtenir une fixation à force et hermétique sur l'élément fixe et sur l'élément mobile (16, 14).

9. Dispositif (12 ; 42) selon l'une quelconque des revendications précédentes dans lequel le système d'étanchéité (10 ; 40) comprend des bagues de renfort métalliques qui entourent le soufflet (30) de l'extérieur et sont disposées chacune dans un pli du soufflet (30) et/ou dans lequel le système d'étanchéité (10 ; 40) comprend un tuyau d'appui qui entoure le soufflet (30) de l'extérieur.

10. Dispositif (12) selon l'une quelconque des revendications précédentes dans lequel le premier fluide (26) se trouve aussi bien dans le logement (18) à l'intérieur de l'élément fixe (16) que dans l'espace (46) entre l'élément mobile (14) et le soufflet (30).

11. Dispositif (42) selon l'une quelconque des revendications 1 à 9, dans lequel le système d'étanchéité (10 ; 40) comprend en outre un joint à lèvres (44) afin d'assurer l'étanchéité du premier fluide (26) par rapport à l'espace (46) entre l'élément mobile (14) et le soufflet (30).

12. Dispositif (42) selon la revendication 11, dans lequel le joint à lèvres (44) est fixé sur l'élément fixe (16) ou sur l'élément mobile (14) et comprend au moins un joint à lèvres (48) qui plaque contre l'autre élément (14, 16) correspondant avec une précontrainte.

13. Dispositif selon la revendication 12, dans lequel le système d'étanchéité (40) comprend une conduite de fluide pour évacuer le premier fluide (26) hors de l'espace (46) entre l'élément mobile (14) et le soufflet (30).

14. Dispositif (12 ; 42) selon l'une quelconque des revendications précédentes **caractérisé en ce que** c'est une pompe haute pression pour l'injection directe de carburant dans un moteur à combustion, le premier fluide (26) étant un carburant et le deuxième fluide (28) un lubrifiant, et l'élément mobile (14) étant un piston entraîné par un arbre à came.

15. Dispositif (12 ; 42) selon l'une quelconque des revendications 1 à 13, **caractérisé en ce que** c'est une soupape de remplissage pour une chaîne de remplissage pour boissons, et dans lequel le premier fluide (26) est une boisson à conditionner.
